# DEMANDE DE BREVET EUROPEEN

(11) **EP 1 201 405 A1**
(43) Date de publication de la demande: **02.05.2002**
(21) Numéro de dépôt: 01402740.3
(22) Date de dépôt: 22.10.2001
(51) Int. Cl.: B29C 70/72, B29C 70/78

(54) **Procédé de fabrication d'une pièce en matière plastique, insert de fixation correspondant, et pièce résultante**

(30) Priorité: 24.10.2000 FR 0013643
(71) Demandeur: Faurecia Industries, 92100 Boulogne (FR)
(72) Inventeur: Query, Pascal, 70200 Ronchamp (FR); Lyonnet, Christophe, 25200 Montbeliard (FR)
(74) Mandataire: Jacobson, Claude

(57) **Abrégé**

Dans ce procédé, notamment pour la fabrication d'une pièce d'équipement d'intérieur d'un véhicule automobile comprenant un corps principal (10) en matière plastique rigide surmoulé sur un revêtement (12)en matière plastique, on fabrique le revêtement (12), on ménage au moins un orifice (32) traversant dans le revêtement (12), on enfiche un insert de fixation (22) à travers l'orifice (32), on réalise une étanchéité (30, 36 ; 30 , 70) entre l'insert et le revêtement, on fixe l'insert de fixation (22) sur le revêtement, on met le revêtement (12) pourvu d'inserts de fixation (22) dans un moule, et on surmoule de la matière plastique du corps principal (10) sur le côté non visible du revêtement (12), la matière plastique solidifiée immobilisant l'insert.

## Description

La présente invention concerne un procédé de fabrication d'une pièce en matière plastique, notamment d'une pièce d'équipement d'intérieur d'un véhicule automobile, la pièce comprenant un corps principal en matière plastique rigide et un revêtement en matière plastique, le corps principal étant surmoulé sur le revêtement.

On connaît dans l'état de la technique des planches de bord pour véhicules automobiles qui comprennent un corps de base à plusieurs couches de matière plastique.

Habituellement un tel corps de base comprend un revêtement extérieur constitué d'une couche relativement molle éventuellement munie d'une peau de décor, et une couche intérieure rigide qui donne la stabilité au corps de base. La fabrication du corps de base est effectuée par surmoulage de la matière rigide sur le revêtement extérieur.

Différents composants doivent être fixés sur la partie visible de la planche de bord, par exemple un module à instruments.

Le montage de ces composants s'effectue de la façon suivante :
- on découpe la couche molle à l'emplacement de fixation du composant,
- on perce un orifice dans la couche rigide,
- on place un écrou sur la partie non visible de la couche rigide et,
- on fixe le composant sur la couche rigide par vissage.

Le pourtour du composant doit respecter des tolérances de jeux et affleurement par rapport à la couche molle à l'état monté.

A cause des tolérances de fabrication de la couche molle, il peut se produire que le pourtour du composant se rapproche ou s'écarte de la surface de la couche molle au-delà des tolérances permises lorsque celle-ci est plus ou moins épaisse que prévue à l'emplacement de fixation. De plus, lorsque l'épaisseur de la couche molle est plus importante que prévue, le pourtour du composant peut être trop serré contre la couche molle, ce qui mène à une déformation du composant ou à une mauvaise fixation de celui-ci.

L'invention a pour but de pallier ces inconvénients et de proposer une pièce en matière plastique revêtue, notamment une pièce d'équipement pour véhicule automobile, sur laquelle les composants peuvent être fixés en respectant les tolérances de jeux et affleurement exigées habituellement sur ce type de produit.

A cet effet l'invention a pour objet un procédé du type précité, caractérisé en ce qu'il comprend les étapes suivantes :
- on fabrique le revêtement ;
- on ménage au moins un orifice traversant dans le revêtement, l'emplacement de cet orifice correspondant à un emplacement de fixation d'un composant sur le corps principal à l'état assemblé de la pièce;
- on enfiche un insert de fixation à travers l'orifice, une partie de l'insert faisant saillie sur le côté non visible du revêtement;
- on réalise une étanchéité entre l'insert de fixation et le revêtement vis-à-vis de la matière plastique du corps principal à l'état liquide;
- on fixe l'insert de fixation sur le revêtement par des moyens de maintien temporaire;
- on met le revêtement pourvu de l'insert de fixation dans un moule ;
- on ferme le moule ; et
- on surmoule la matière plastique du corps principal sur le côté non visible du revêtement, la matière plastique solidifiée immobilisant l'insert.

Selon des modes particuliers de réalisation de l'invention, le procédé peut comporter une ou plusieurs des caractéristiques suivantes :
- les moyens de maintien temporaire réalisent ladite étanchéité ;
- les moyens d'étanchéité comprennent une collerette solidaire de l'insert de fixation qui bute contre la surface visible du revêtement, et un organe complémentaire d'étanchéité solidaire de l'insert de fixation du côté non visible du revêtement, le revêtement étant serré entre la collerette et l'organe complémentaire ;
- l'insert est une douille plastiquement déformable ouverte du côté visible, et l'organe complémentaire d'étanchéité est un bourrelet de la douille obtenu par refoulement axial de celle-ci ;
- l'organe complémentaire d'étanchéité est une rondelle d'étanchéité élastique ;
- on ménage l'orifice dans le revêtement par perçage et, avant le perçage, on dispose, à l'emplacement qui correspond à l'orifice, un élément de centrage de forme complémentaire à l'outil de perçage ;
- l'élément de centrage est venu de matière avec le revêtement ; et
- l'élément de centrage est un embout, notamment de forme extérieure conique.

L'invention a en outre pour objet un insert de fixation pour la mise en oeuvre d'un procédé tel que défini ci-dessus, caractérisé en ce qu'il comprend à une extrémité une butée extérieure, et à l'autre extrémité une partie auto-perforante pour le perçage de l'orifice.

Cet insert peut comporter une ou plusieurs des caractéristiques suivantes :
- l'extrémité auto-perforante est une partie cylindrique extérieurement ayant une cavité intérieure et ayant une arête vive à l'emplacement d'intersection du cylindre et de la cavité ;
- l'insert de fixation comporte sur sa- surface extérieure des organes de solidarisation, notamment un moletage ; et
- l'insert comporte une partie intermédiaire creuse plastiquement déformable par refoulement axial.

L'invention a en outre pour objet une pièce en matière plastique du type comprenant un corps principal en matière plastique rigide, pourvu d'un revêtement, le corps principal étant surmoulé sur le revêtement, et au moins un insert de fixation d'un composant sur la pièce, caractérisée en ce que l'insert de fixation est tel que défini ci-dessus, la butée extérieure s'appliquant contre la surface visible du revêtement et une partie de l'insert traversant un orifice ménagé dans le revêtement et faisant saillie du côté non visible du revêtement, cette partie étant enrobée par la matière plastique rigide du corps principal.

Selon des modes particuliers de réalisation, cette pièce peut comporter l'une ou plusieurs des caractéristiques suivantes :
- l'insert de fixation comprend en outre des moyens de serrage du revêtement contre la butée ;
- la pièce est une pièce d'équipement d'intérieur d'un véhicule automobile, notamment une planche de bord, en particulier munie d'un revêtement de décor.

L'invention sera mieux comprise à la lecture de la description qui va suivre, donnée uniquement à titre d'exemple et faite en se référant aux dessins annexés, sur lesquels :
- la Figure 1 est une vue schématique en coupe transversale d'un premier mode de réalisation d'une planche de bord fabriquée par le procédé selon l'invention ;
- la Figure 2 est une vue schématique en coupe d'un détail d'un revêtement et d'un insert de fixation ;
- la Figure 3 est une vue du détail III de la Figure 1 à plus grande échelle ; et
- la Figure 4 est une vue de détail d'un deuxième mode de réalisation de la planche de bord selon l'invention.

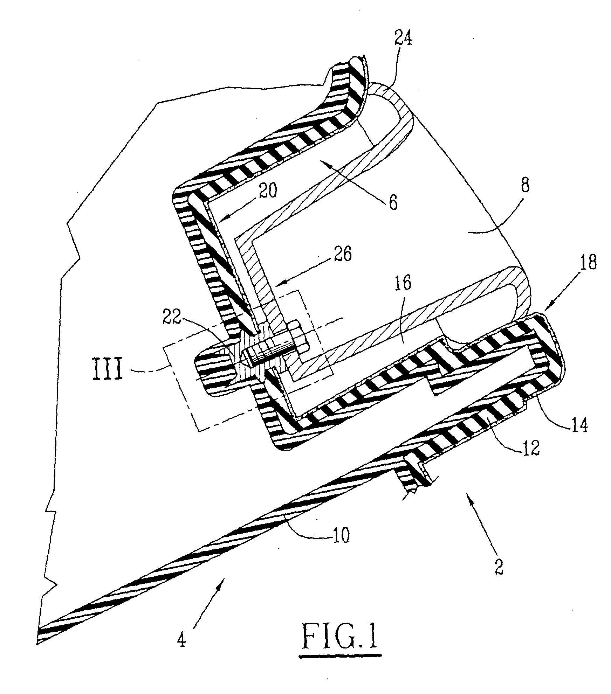

Sur la Figure 1, on a représenté une vue en coupe d'un premier mode de réalisation d'une planche de bord selon l'invention, désignée par la référence générale 2.

Dans ce qui suit, l'expression « visible » désignera le sens tourné vers le passager à l'état monté de la planche de bord, tandis que l'expression « non visible » désignera le sens dirigé vers l'intérieur de la planche de bord.

La planche de bord 2 comprend un corps de base 4 dans lequel est formé un logement 6 d'un composant 8, tel qu'un module à instruments.

Le corps de base 4 comprend un corps principal 10 en matière plastique rigide. L'épaisseur de la paroi de ce corps principal 10 est typiquement de 2 mm à 6 mm.

La surface visible du corps principal 10 est pourvue d'un revêtement 12 en matière plastique molle ou semi-rigide. De préférence, ce revêtement a une épaisseur comprise entre 1 mm et 4 mm. Le revêtement 12 est pourvu sur sa surface visible d'une peau de décor 14.

Pour la clarté de représentation , l'épaisseur des couches ne sont pas représentées à l'échelle sur les Figures.

Le logement 6 de composant est délimité par un creux 16 formé dans la planche de bord 2. Ce creux 16 comporte un bord visible 18. Sur le fond 20 du creux est fixé un insert 22 de fixation du composant 8.

On voit que le composant 8 est en forme de cuvette, et comprend un rebord 24 par lequel il s'applique contre le bord 18 du creux. Le fond 26 du composant est fixé sur l'insert 22.

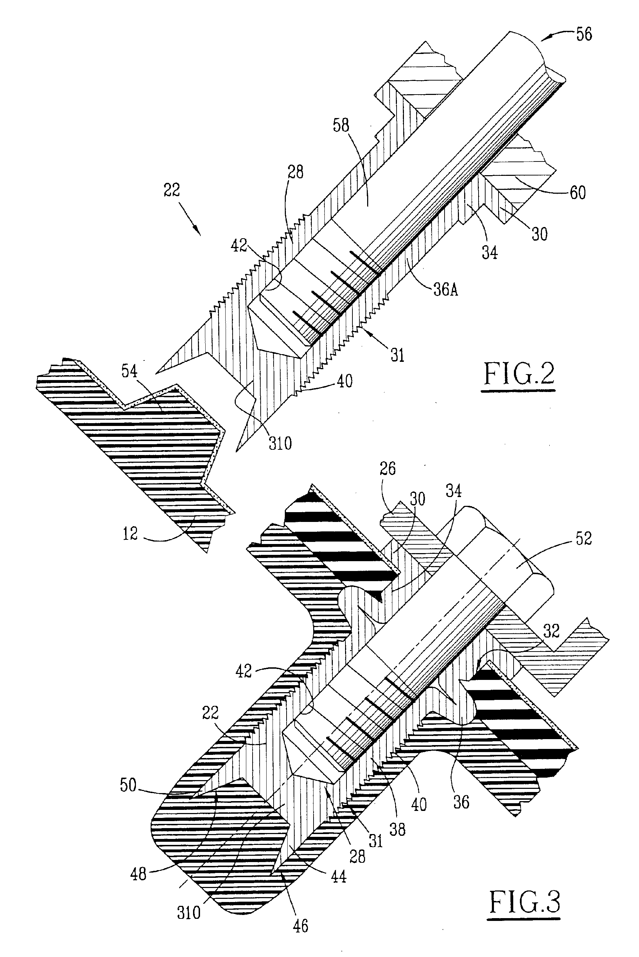

Sur la Figure 3 on voit plus en détail cet insert de fixation.

L'insert de fixation 22 est principalement constitué d'une douille 28 en matière déformable plastiquement, par exemple en acier, en cuivre, en aluminium ou en matière plastique. Lorsque la douille est en matière plastique, cette matière a une température de fusion supérieure à celle de la matière plastique du corps principal 10. La douille 28 est ouverte vers le côté visible et porte sur son extrémité visible une collerette 30 qui s'applique contre la peau de décor 14. En revanche, la paroi périphérique 31 de la douille 28 et son extrémité 310 opposée à la collerette 30 sont fermées. La douille 28 traverse un orifice 32 ménagé dans le revêtement 12 et fait saillie sur le revêtement 12 du côté non visible.

La douille comprend en outre une partie étagée 34 d'épaisseur radiale accrue qui se raccorde à la collerette 30 et qui présente une longueur axiale inférieure à l'épaisseur du revêtement 12 et de la peau de décor 14. Un bourrelet 36 se raccorde à cette partie étagée 34 du côté non visible et serre le revêtement 14 et la peau 12 contre la collerette 30, de façon étanche à la matière plastique du corps principal 10 à l'état liquide (voir ci-après) lors du surmoulage.

Une partie cylindrique 38 se raccorde à ce bourrelet 36, et est munie d'un moletage 40 sur sa surface extérieure et d'un taraudage 42 sur sa surface intérieure.

L'insert 22 est terminé à son extrémité non visible par une partie 44 de solidarisation et d'auto-perçage. Cette partie 44 comporte une surface cylindrique extérieure 46 et une surface conique intérieure 48 ouverte vers le côté non visible. Ces deux surfaces forment une arête vive circulaire 50 de perçage sur l'extrémité non visible.

L'arête 50 sert à percer l'orifice 32 dans le revêtement 12 (voir ci-après) lors du montage de l'insert 22 sur le revêtement 12, ainsi qu'à solidariser l'insert 22 à la matière plastique du corps principal 10.

A l'état fini de la pièce, comme représenté sur la Figure 3, la partie 44, la partie cylindrique 38 et le côté non visible du bourrelet 36 sont recouverts de la matière plastique du corps principal 10 et assurent la fixation de l'insert de fixation 22 sur celui-ci.

Le fond 26 du composant s'applique contre la collerette 30 et est fixé sur l'insert 22 par une vis 52 qui est vissée dans le taraudage 42 de l'insert.

Sur la Figure 2, on a représenté le revêtement et l'insert de fixation 22 à l'état non monté.

Le revêtement 12 comporte sur sa surface visible un embout de centrage 54 tronconique de forme complémentaire à la surface conique 48 intérieure de l'insert de fixation 22.

La partie 36A de l'insert correspondant au bourrelet 36 n'est pas encore déformée et est un cylindre creux de diamètre extérieur égal à celui de la partie cylindrique 38 de l'insert 22 à l'état monté.

L'insert de fixation 22 est monté sur un outil de montage 56 qui comprend une tige filetée 58 vissée dans le taraudage 42 de l'insert et une butée 60 en forme d'anneau circulaire. La tige filetée 58 est axialement rétractable par rapport à la butée 60.

La planche de bord selon l'invention est fabriquée de la façon suivante :

Tout d'abord, on fabrique le revêtement 12 avec la peau de décor 14, et on lui confère une forme qui correspond sensiblement à la forme finie du revêtement 12, par exemple par rotomoulage ou par thermoformage. Lors de cette étape, les embouts de centrage 54 sont également formés, et ce d'un seul tenant avec le revêtement 12.

Puis, on visse la tige filetée 58 de l'outil de montage 56 sur l'insert de fixation 22 jusqu'à ce que la butée 60 vienne s'appliquer contre la collerette 30 (Figure 2). Dans cette configuration, l'insert de fixation 22 est entraîné en rotation conjointement avec l'outil de montage 56. On applique la partie 44 d'auto-perçage de l'insert 22 sur l'embout de centrage 54, la coopération de l'embout de centrage 54 et de la surface conique 48 intérieure centrant l'arête vive 50 à l'emplacement souhaité pour l'orifice 32.

L'arête 50 découpe alors l'orifice 32 dans la peau 14 et le revêtement 12. Puis on enfile l'insert de fixation 22 dans l'orifice jusqu'à ce que la collerette 30 vienne s'appliquer contre la peau de décor 14. Puis on rétracte la tige filetée 58 par rapport à la butée 60, ce qui refoule la partie cylindrique 36A en formant le bourrelet 36 et en serrant le revêtement 12 et la peau 14 entre ce bourrelet et la collerette.

La partie étagée 34 de l'insert de fixation 22 s'applique contre la paroi de l'orifice 32 et fixe l'insert 22 de façon supplémentaire par frottement.

On dévisse l'outil de montage 56 de l'insert 22, et on pose le revêtement 12 muni de l'insert 22 dans un moule.

La collerette 30 et le bourrelet 36 maintiennent l'insert 22 temporairement et évitent que celui-ci se libère du revêtement 12.

Le moule peut être muni d'une tige de maintien qui s'enfile dans l'insert de fixation 22 afin d'aider à l'immobilisation de ce dernier dans le moule lorsque le revêtement n'est pas suffisamment rigide.

Ensuite, on ferme le moule et on surmoule de la matière plastique liquide sur le côté non visible du revêtement 12. La matière plastique liquide enrobe l'insert 22 sur sa partie cylindrique 38 et sa partie de solidarisation 44, ainsi que la partie non visible du bourrelet 36. Grâce au fait que le revêtement 12 est serré entre le bourrelet 36 et la collerette 30, l'orifice 32 est étanche à la matière plastique liquide, ce qui minimise le risque d'une pénétration de celle-ci sur le côté visible de la peau de décor 14.

On laisse durcir la matière plastique et on démoule la pièce finie. L'insert 22 est complètement immobilisé par la matière plastique rigide, et la surface visible de la collerette 30 est positionnée par rapport à la surface de la peau de décor 14 et au bord 18 du creux.

Puis on insère le composant 8 dans le creux 16 et on le visse contre la collerette 30 avec la vis 52.

Etant donné que la collerette 30 est bien positionnée par rapport au bord 18 du creux, le rebord 24 du composant 8 s'applique contre le bord 18 du creux avec un écartement ou un serrage diminué.

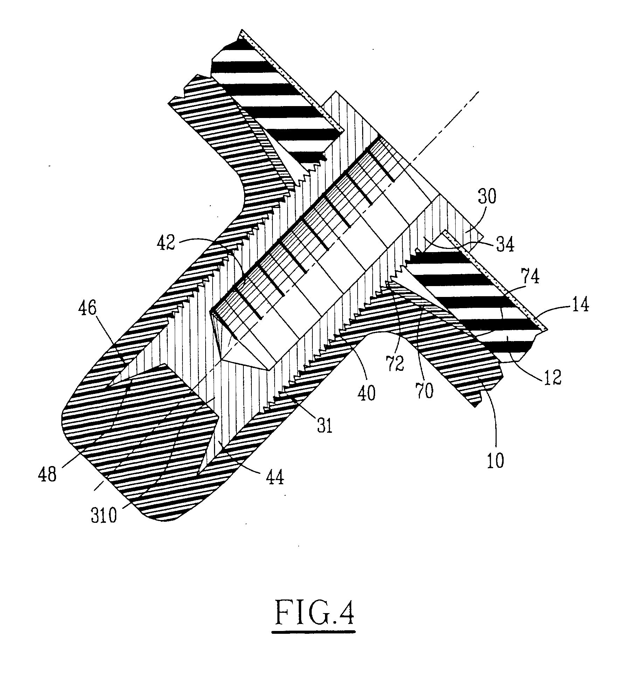

Sur la Figure 4 on a représenté un détail d'un deuxième mode de réalisation d'une planche de bord fabriquée par le procédé selon l'invention, le composant et la vis étant omis.

Dans ce qui suit, uniquement les différences par rapport au premier mode de réalisation seront décrites les éléments analogues portent les mêmes références.

L'insert de fixation 22 ne comporte pas de bourrelet 36 de serrage à l'état fixé sur le revêtement 12. Par contre, il est de forme sensiblement cylindrique extérieure sur sensiblement toute sa longueur.

Il comporte un moletage 40 circulaire sur sa surface extérieure. Le moletage 40 s'étend depuis l'extrémité de perçage 44 jusque dans la zone qui se raccorde à la partie étagée 34. De cette façon, la partie du moletage 40 adjacente à la partie étagée 34 s'appuie contre la surface de l'orifice 32 et aide à maintenir l'insert temporairement par complémentarité de formes.

En outre, une rondelle 70 de maintien et d'étanchéité est enfilée sur l'insert de fixation 22 du côté non visible.

Cette rondelle 70 est en une matière plastique qui a une température de fusion supérieure à celle de la matière plastique du corps principal 10. Elle est par exemple en matière thermoplastique ou en un élastomère dur.

La rondelle 70 a la forme d'une rondelle Belleville. A l'état non monté, le diamètre de son bord intérieur 72 est légèrement plus petit que le petit diamètre du moletage 40. A l'état monté, elle est serrée de façon étanche contre le fond du moletage 40. Le bord extérieur 74 de la rondelle 70 s'applique contre la surface non visible du revêtement 12, et ceci également de façon étanche.

Le montage de cet insert de fixation s'effectue de la façon suivante :

On découpe l'orifice 32 dans le revêtement 12 avec l'insert 22, et on enfiche ce dernier dans cet orifice 32 de façon analogue au premier mode de réalisation.

Puis on enfile la rondelle 70 sur la partie non visible de l'insert 22 jusqu'à ce que le bord extérieur 74 de la rondelle 70 s'applique contre le revêtement 12. Ensuite, on dévisse l'outil de montage 56 sans refouler l'insert 22.

L'insert 22 est maintenu temporairement par le serrage réalisé par la rondelle 70 et la collerette 30, ainsi que par frottement par la partie étagée 34 et par complémentarité de formes grâce à la partie moletée 40.

Le surmoulage et le montage du composant 8 s'effectuent ensuite de façon analogue au premier mode de réalisation.

La rondelle 70 assure l'étanchéité vis-à-vis de la matière plastique liquide lors du surmoulage.

On constate que le procédé selon l'invention permet de fixer les inserts de fixation sur la pièce en matière plastique sans l'opération de découpage du revêtement et de la peau de décor, ce qui conduit à un coût de fabrication faible.

## Revendications

1. Procédé de fabrication d'une pièce en matière plastique, notamment d'une pièce d'équipement d'intérieur d'un véhicule automobile, la pièce (2) comprenant un corps principal (10) en matière plastique rigide et un revêtement (12) en matière plastique, le corps principal (10) étant surmoulé sur le revêtement (12), **caractérisé en ce qu'**il comprend les étapes suivantes :
- on fabrique le revêtement (12);
- on ménage au moins un orifice (32) traversant dans le revêtement (12), l'emplacement de cet orifice (32) correspondant à un emplacement de fixation d'un composant (6) sur le corps principal (10) à l'état assemblé de la pièce (2);
- on enfiche un insert de fixation (22) à travers l'orifice (32), une partie de l'insert faisant saillie sur le côté non visible du revêtement (12);
- on réalise une étanchéité (30, 36 ; 30 , 70) entre l'insert de fixation (22) et le revêtement (12) vis-à-vis de la matière plastique du corps principal (10) à l'état liquide;
- on fixe l'insert de fixation (22) sur le revêtement par des moyens de maintien temporaire (30, 36 ; 30, 70);
- on met le revêtement (12) pourvu de l'insert de fixation (22) dans un moule ;
- on ferme le moule ; et
- on surmoule la matière plastique du corps principal (10) sur le côté non visible du revêtement (12), la matière plastique solidifiée immobilisant l'insert.

2. Procédé selon la revendication 1, **caractérisé en ce que** les moyens de maintien temporaire (30, 36 ; 30, 70) réalisent ladite étanchéité.

3. Procédé selon la revendication 1 ou 2, **caractérisé en ce que** les moyens d'étanchéité (30, 36 ; 30, 70) comprennent une collerette (30) solidaire de l'insert de fixation (22) qui bute contre la surface visible du revêtement (12), et un organe complémentaire d'étanchéité (36 ; 70) solidaire de l'insert de fixation (22) du côté non visible du revêtement (12), le revêtement (12) étant serré entre la collerette (30) et l'organe complémentaire.

4. Procédé selon la revendication 3, **caractérisé en ce que** l'insert est une douille plastiquement déformable ouverte du côté visible, et **en ce que** l'organe complémentaire d'étanchéité est un bourrelet (36) de la douille obtenu par refoulement axial de celle-ci.

5. Procédé selon la revendication 3, **caractérisé en ce que** l'organe complémentaire d'étanchéité est une rondelle d'étanchéité élastique (70).

6. Procédé selon l'une quelconque des revendications 1 à 5, **caractérisé en ce qu'**on ménage l'orifice (32) dans le revêtement (12) par perçage et **en ce que**, avant le perçage, on dispose, à l'emplacement qui correspond à l'orifice (32), un élément de centrage (54) de forme complémentaire à l'outil de perçage.

7. Procédé selon la revendication 6, **caractérisé en ce que** l'élément de centrage (54) est venu de matière avec le revêtement (12).

8. Procédé selon la revendication 6 ou 7, **caractérisé en ce que** l'élément de centrage (54) est un embout, notamment de forme extérieure conique.

9. Insert de fixation pour la mise en oeuvre d'un procédé selon l'une quelconque des revendications 1 à 8, **caractérisé en ce qu'**il comprend à une extrémité une butée extérieure (30), et à l'autre extrémité une partie auto-perforante (44) pour le perçage de l'orifice (32).

10. Insert selon la revendication 9, **caractérisé en ce que** l'extrémité auto-perforante (44) est une partie cylindrique extérieurement (46) ayant une cavité intérieure (48) et ayant une arête vive (50) à l'emplacement d'intersection du cylindre (46) et de la cavité (48).

11. Insert selon la revendication 9 ou 10, **caractérisé en ce que** l'insert de fixation (22) comporte sur sa surface extérieure des organes de solidarisation, notamment un moletage.

12. Insert selon l'une quelconque des revendications 9 à 11, **caractérisé en ce qu'**il comporte une partie intermédiaire creuse (36A) plastiquement déformable par refoulement axial.

13. Insert selon l'une quelconque des revendications 9 à 11, **caractérisé en ce qu'**il comprend une rondelle élastique (70) positionnable le long de l'insert.

14. Pièce en matière plastique, du type comprenant un corps principal (10) en matière plastique rigide, pourvu d'un revêtement (12), le corps principal (10) étant surmoulé sur le revêtement (12), et au moins un insert de fixation (22) d'un composant (8) sur la pièce, **caractérisée en ce que** l'insert de fixation (22) est conforme à l'une quelconque des revendications 9 à 13, la butée extérieure (30) s'appliquant contre la surface visible du revêtement et une partie (38, 44) de l'insert traversant un orifice (32) ménagé dans le revêtement (12) et faisant saillie du côté non visible du revêtement (12), cette partie (38, 44) étant enrobée par la matière plastique rigide du corps principal (10).

15. Pièce selon la revendication 14, **caractérisée en ce que** l'insert de fixation (22) comprend en outre des moyens de serrage (36 ;70) du revêtement (12) contre la butée (30).

16. Pièce selon la revendication 14 ou 15, **caractérisée en ce que** la pièce est une pièce d'équipement intérieur d'un véhicule automobile, notamment une planche de bord (2), en particulier munie d'un revêtement de décor (14).
